# EUROPEAN PATENT SPECIFICATION

(11) **EP 1 397 389 B1**
(45) Date of publication and mention of the grant of the patent: **10.08.2005**
(21) Application number: 01928287.0
(22) Date of filing: 27.04.2001
(51) Int. Cl.: C08B 37/00

(54) **A METHOD OF ISOLATION OF IMMUNOSTIMULATING GLUCAN FROM OYSTER MUSHROOM**
EIN VERFAHREN ZUR ISOLIERUNG VON GLUKAN MIT IMMUNSTIMULIERENDER WIRKUNG AUS AUSTERNPILZEN
PROCEDE D'ISOLATION DE GLUCANE IMMUNOSTIMULANT PROVENANT DE PLEUROTES

(30) Priority: 23.04.2001 SK 548012001
(43) Date of publication of application: 17.03.2004
(73) Proprietor: Pleuran, s.r.o., 821 09 Bratislava (SK)
(72) Inventor: GABRIZOVA, Leona, 821 05 Bratislava (SK)
(74) Representative: Holoubkova, Maria
(86) International application number: PCT/SK2001/000014
(87) International publication number: WO 2002/085950

(56) References cited:
- WO-A-93/12243
- GB-A- 1 279 104
- DATABASE CHEMABS [Online] Chemical Abstracts Service, Columbus, Ohio, US; YOSHIDA HIROSHI ET AL.: "Changes in the content of carbohydrates and organic acids in fruit-bodies of hiratake mushroom (Pleurotus ostreatus) during development and post-harvest storage." retrieved from CA Database accession no. 107:93646 XP002191070 & NIPPON SHOKUHIN KOGYO GAKKAISHI, vol. 34, no. 5, 1987, pages 288-297, JP
- DATABASE CHEMABS [Online] chemical abstracts service, Columbus, Ohio, US; "Process for isolating and adjusting fungal .beta.-1,3- glucan" Database accession no. 121:55997 XP002191071 & CS 276 192 A (SLOVENSKA TECHNICKA UNIVERZITA) 15 April 1992 (1992-04-15) cited in the application
- MASASHI MIZUNO: "Anti-tumor polysaccharides from mushrooms during storage." BIOFACTORS, vol. 12, 2000, pages 275-281, XP008000728
- J. B. W. HAMMOND: "Changes in composition of harvested mushrooms (agaricus bisporus)." PHYTOCHEMISTRY, vol. 18, 1979, pages 415-418, XP008000727 UK
- S. KARACSONYI ET AL.: "POlysaccharides of Pleurotus ostreatus: Isolation and structure of pleuran, an alkali-insoluble .beta.-D-glucan." CARBOHYDRATE POLYMERS, vol. 24, 1994, pages 107-111, XP001053703 UK
- Y. YOSHIOKA ET AL.: "Antitumor polysaccharides freom P. ostreatus (FR.) Quél.: Isolation and structure of a .beta.-glucan." CARBOHYDRATE RESEARCH, vol. 140, 1985, pages 93-100, XP002191069 NL

## Description

### Technical Field

The present invention relates to a method of isolation of immunostimulant glucan from oyster mushroom (Pleurotus ostreatus), preferably from its stalks by defibration, subsequent bleaching with hydrogen peroxide and dehydration.

### Background Art

It is well known that some natural polysaccharides are characterized by immunostimulant and other pharmacological properties. It concerns usually polysaccharides having in their principal polysaccharide chain strictly β-(1,3)-D-glycosidic linkage which is the main supporter of their immunostimulant activity.

Immunostimulant polysaccharides occur in the cell walls of bacteria, yeasts and several fungi, especially of those of the species Basidiomycetes (Di LUZIO, N.R., CHIHARA, G. : Adv. Immunopharmacol. 1, 477 (1981); JAQUES, P.J. : Immunomodulator polysaccharides, p. 429-438 in Current concepts in human immunology and cancer immunomodulation : Eds. SCRRON, B. et al., Elsevier Biomed. B.V. (1982); CHIHARA, G. : EOS riv. Immunol. Immunopharm. 4, 85 (1984)).

Immunopharmacologically active substances, i. e. also β-(1,3)-D-glucans, acting on the basic protective systems of a host may positively influence the number, functional activity and interactions of macrophages of T and B lymphocytes, of NK cells as well as their humoral and secretoric components. Thus, they may non-specifically modify an extensive number of bacterial, fungal parasitic and viral infections. The mechanism of action of glucans differs, therefore, considerably from that of chemotherapeutants and antibiotics (TRNOVEC et al. : Farm. obzor 56, 271 (1987); OSTAD, E., SELJELICH, R. : Acta path. Microbiol. Scand. 88, 97 (1980); LEHNBORG, G., HEDSTRÖM, K.G., NORD, C.E. : J. Reticuloendothel. Soc. 32, 347 (1982).

Also further works confirm that immunostimulant glucans are substances worth of extraordinary attention in treating and prevention of many diseases. For example, it has been proven that immunoglucans increase immunity against various bacterial and viral diseases, they act against cancer, they potent the effect of radiotherapy of oncological pacients (KOMASU, N. et al. : US patent 3 943 247 (1976), MIYACHI, M. et al. : Ger. Offen 3, 032636 (1981), PATCHEM, M. : Surv. Immunol. Re. 2, 237 (1983), POSPÍ 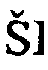 IL et al. : Experiencia 38, 1232 (1982)).

β-(1,3)-D-glucans are currently produced at an industrial scale mainly from yeasts and some fungi of the species Basidiomycetes.

Major disadvantages of glucan from yeasts are the relatively demanding technology, low yield of glucan (about 5 %, referred to the dry matter of the yeasts) and high requirements for elimination of the waste alkaline solutions. The main advantage of fungal glucans is the technological simplicity and about 30 to 50 % yield of glucan, referred to the dry matter of the input raw material.

At the moment two methods of glucan isolation from oyster mushroom are known, either cold or hot extraction of sporangia (KUNIAK, L' et al. : CS patent Nr. 274 918 and CS patent Nr. 276 192), where a yield of immunostimulant glucan of up to 50 % can be achieved, referred to the dry matter of oyster mushroom.

In the method according to the CS patent Nr. 274 918, where sodium hydroxide having a concentration of 0.1 to 0.2 M/l is used in the first step of the extraction of non-glucan components, also a part of the water-soluble glucan is dissolving in an amount of 10 to 15 %, referred to the dry matter of the input raw material.

By means of a more detailed study of chemical changes of the protein part of oyster mushroom which proceed at temperatures of 95 to 100 °C with a 0.1 to 0.2 M solution of NaOH it has been found that a part of proteins is denatured and it becomes insoluble, i. e. the nitrogen content in the final glucan is increasing and a part of them is transformed by alkaline hydrolysis to oligopeptides or amino acids, forming dark condensation products which are sorbed on glucan and decrease the whiteness of the final insoluble glucan.

The aim of the present invention is to increase the yield of the insoluble glucan and its whiteness at a minimal formation of waste alkaline solutions.

### Disclosure of Invention

This aim is achieved to a great extent by a method of isolation of immunostimulant glucan from oyster mushroom, preferably from its stalks, by defibration, subsequent bleaching with hydrogen peroxide at a temperature of 15 to 25 °C for 15 to 24 hours in a medium of a sodium hydroxide solution, and dehydration, the nature of which consists in that the defibration which precedes the bleaching with hydrogen peroxide in the medium of a sodium hydroxide solution, is performed within 26 hours at the latest after having harvested the oyster mushrooms.

By more thorough study of the glucan part of oyster mushroom it has been found that it consists of two parts, one of them being water-soluble and consisting of oligopeptides or amino acids, the other part being water insoluble and consisting of denatured proteins, i. e. containing an increased amount of nitrogen. The ratio of the water-soluble glucan to the insoluble glucan is about 1 : 2. However, this ratio is valid at the moment of separating the sporangium from the substrate, i. e. immediately after having harvested the oyster mushroom. But if the oyster mushroom is stored after harvest, autolysis of glucan by the present enzyme of β-(1,3)-D-glucanase takes place. To slow the autolysis of glucan down, it is necessary to perform the defibration of oyster mushroom within 26 hours at the latest after having harvested it.

It also has been found that hydrolysis of glucan increases considerably at a higher temperature. If the storage temperature is about 20 °C or higher, the hydrolysis extent is proportional to the temperature and the storage time. In the course of autolysis the portion of the water-soluble glucan increases at the expense of the insoluble portion. It has been found that it is necessary to store the oyster mushrooms at a temperature of 4 to 8 °C.

The defibration is performed in a medium of at least double amount of aqueous solution of sodium or potassium carbonate having a concentration of 0.05 to 0.15 % by weight. The defibration proceeds at a pH value of the solution of 8 to 9 for 1 to 8 minutes, during which time a reaction suspension is formed. A defibration, performed in such a short time interval of 1 to 8 min., causes a maximum elimination of enzyme activity of the present β-(1,3)-D-glucanase. The suspension is then filtered and thoroughly washed with water, so that water-soluble components are removed.
The reaction suspension is then bleached with hydrogen peroxide in the presence of sodium or potassium hydroxide at a concentration of the insoluble glucan of 4 to 5 % by weight. Dehydration is performed with ethanol, acetone or by lyophilization.

It has been found that defibration which is accomplished in 5 min. is preferred.

It has further been found that in the course of the filtration water-soluble components, such as, for example, proteins, ashes, enzymes, saccharides and others, are removed.

It has also been found that besides using dehydration agents, such as ethanol and acetone; it is preferable to perform the dehydration by lyophilization. If we choose such dehydration, glucan of a purity of 94 % is obtained. Glucan of this purity is suitable for vaccine preparation.

The main advantage of the method according to the present invention consists in that it allows us to achieve 15 to 20 % higher yield, referred to the dry matter of the input raw material. A further advantage consists in 20 to 30 % higher whiteness of the glucan obtained compared with the methods known so far. No less important advantage consists in the ecological advantage of this method, by which maximum decrease of costs for waste-water treatment is achieved. According to the present invention, the content of organic substances in washing waste-waters is decreased by 30 % and the content of the water-soluble glucan by 15 to 20 %.

### Examples of Embodiments

### Example 1

In an industrial mixer, 20 kg of oyster mushroom stalks which were harvested 5 hours ago are defibrated in a medium of an aqueous solution of sodium carbonate which consists of drinking water in an amount of 40 l and sodium carbonate in an amount of 60 g. The defibration takes place in the mixer for 3 minutes, whereby a homogenized suspension arises.

The present sodium carbonate ensures the pH value of the medium to be 8, at which the enzyme activity of the present β-(1,3)-D-glucanase is eliminated and simultaneously further dissolution of water insoluble glucan is prevented. After defibration the reaction suspension is filtered through a cloth filter and thoroughly washed with drinking water, removing all water-soluble substances, such as proteins, ashes, enzymes, saccharides as well as the water-soluble glucan. Liquid phase is let well to run off the insoluble portion of glucan obtained by the above procedure, which glucan is inserted into a 50 l reactor and watered with 200 ml of water, to which 80 g of NaOH are added. After perfect mixing, 2 l of 30 % hydrogen peroxide are added to the reaction mixture under continuous stirring, and the reaction mixture is let to bleach statically for 18 hours. After the bleaching is completed the glucan obtained is continuously washed with drinking water until the red colouration by phenolphtalein disappears. 5 l of drinking water acidified with 20 ml of acetic acid are added to the filter cake which is, after further mixing, again washed with 10 l of drinking water. The wet glucan is pressed in a hydraulic press, 20 l of concentrated ethanol are poured over the pressed cake and left to stand for 1 hour, then the suspension is transferred into a press with a cloth insert and after draining off pressed. Dehydration with ethanol is repeated two more times, then the glucan obtained is dried at a temperature of 60 °C. The dry glucan is further ground in a dry mill and sieved through a sieve with a mesh of 0.5 mm.

The resulting glucan with the yield of 70 %, referred to the weight of the dry matter of oyster mushroom stalks, is insoluble in water, in diluted acids as well as in organic solvents, it contains 0.6 % of chitin nitrogen, 1.5 % of ash and has a particle size of 0.5 mm.

### Example 2

The procedure used is the same as in Example 1 except that 1.5 l of hydrogen peroxide having a concentration of 30 % by weight is used for bleaching and the bleaching is performed for 24 hours at a temperature of 23 °C.

The yield and qualitative parameters of glucan are comparable to the qualitative parameters of glucan of Example 1.

### Example 3

The procedure used is the same as in Example 2 except that dehydration of wet glucan is performed by lyophilization, whereby very fine powder glucan is obtained suitable for vaccine preparation in veterinary medicine.

### Example 4

The procedure used is the same as in Example 3 except that during mixing the fresh oyster mushrooms 80 g of potassium carbonate instead of sodium carbonate are used.

The yield and qualitative parameters of glucan are comparable to the qualitative parameters of glucan of Example 1.

### Industrial Applicability

Glucan obtained by the method according to the present invention can be utilized as an immunostimulant foodstuff supplement against various bacterial and viral diseases or with a high radioprotective effect in radiotherapy of oncological pacients.

## Claims

1. A method of isolation of immunostimulant glucan from oyster mushroom Pleurotus ostreatus), preferably from its stalks, by defibration, subsequent bleaching with hydrogen peroxide at a temperature of 15 to 25 °C for 15 to 24 hours in a medium of a sodium hydroxide solution, and dehydration, **characterized in that** the defibration which precedes the bleaching with hydrogen peroxide in the medium of a sodium hydroxide solution at a concentration of insoluble glucan of 4 to 5 % by weight and dehydration, is performed within 26 hours at the latest after having harvested the oyster mushroom, which has been stored at a temperature of 4 to 8 °C, in a medium of at least double amount of aqueous solution of sodium or potassium carbonate having a concentration of 0.05 to 0.15 % by weight, at a pH value of the solution of 8 to 9, for 1 to 8 min., whereby a reaction suspension with eliminated enzyme activity of the present β-(1,3)-D-glucanase arises, removing the water-soluble components from the reaction suspension by filtration and by thorough washing with water.

2. A method according to claim 1, **characterized in that** the bleaching with hydrogen peroxide is performed in a medium of sodium hydroxide solution at a concentration of insoluble glucan of 0.05 to 0.09 % by weight.

3. A method according to claims 1 and 2, **characterized in that** the defibration is preferably performed for 5 minutes.

4. A method according to claims 1 to 3, **characterized in that** it is preferred to perform the defibration within 24 hours after having harvested the oyster mushroom.

5. A method according to claims 1 to 4, **characterized in that** it is preferred to perform the defibration with oyster mushroom which has been stored at a temperature of 5 °C.

6. A method according to claims 1 to 5, **characterized in that** the dehydration is performed with ethanol, acetone or by lyophilization.

7. A method according to claims 1 to 6, **characterized in that** water-soluble components, such as proteins, ashes, enzymes, saccharides, water-soluble glucan, are removed from the suspension by filtration.

## Patentansprüche

1. Methode der Isolierung von immunostimulierendem Glucan aus dem Austernpilz (Pleurotus ostreatus), vorteilhaft aus seinem Stiel, durch Defibrierung, anschließendes Bleichen mit Wasserstoffperoxid bei der Temperatur von 15 bis 25 °C, 15 bis 24 Stunden lang in einem Medium von Natriumhydroxidlösung, und Dehydratisierung, **dadurch gekennzeichnet, daß** die Defibrierung, die dem Bleichen mit Wasserstoffperoxid in einem Medium von Natriumhydroxidlösung mit der Konzentration von unlöslichem Glukan von 4 bis 5 Gewichtsprozent und der Dehydratisierung vorausgeht, binnen 26 Stunden nach dem Sammeln des Austernpilzes, der bei der Temperatur von 4 bis 8 °C gelagert worden ist, in einem Medium von mindestens zweifacher Menge von wäßriger Natrium- oder Kaliumcarbonatlösung mit der Konzentration von 0.05 bis 0.15 Gewichtsprozent, bei dem pH der Lösung von 8 bis 9, 1 bis 8 Minuten lang durchgeführt wird, wobei eine Reaktionssuspension mit eliminierter Enzymaktivität der anwesenden β(1,3)-D Glucanase entsteht, die wasserlöslichen Bestandteile aus der Reaktionssuspension durch Filtrierung beseitigt werden und sie wird mit Wasser vollkommen durchgewaschen.

2. Die Methode nach Anspruch 1, **dadurch gekennzeichnet, daß** das Bleichen mit Wasserstoffperoxid in einem Medium von Natriumhydroxidlösung mit der Konzentration von 0.05 bis 0.09 Gewichtsprozent durchläuft.

3. Die Methode nach Anspruch 1 und 2, **dadurch gekennzeichnet, daß** die Defibrierung vorteilhaft 5 Minuten lang durchgeführt wird.

4. Die Methode nach Ansprüchen 1 bis 3, **dadurch gekennzeichnet, daß** es vorteilhaft ist, die Defibrierung binnen 24 Stunden nach dem Sammeln des Austernpilzes durchzuführen.

5. Die Methode nach Ansprüchen 1 bis 4, **dadurch gekennzeichnet, daß** es vorteilhaft ist, die Defibrierung bei dem Austernpilz, der bei der Temperatur von 5 °C gelagert worden ist, durchzuführen.

6. Die Methode nach Ansprüchen 1 bis 5, **dadurch gekennzeichnet, daß** die Dehydratisierung mit Äthanol, Azeton oder durch Gefriertrocknung durchgeführt wird.

7. Die Methode nach Ansprüchen 1 bis 6, **dadurch gekennzeichnet, daß** aus der Suspension die wasserlöslichen Bestandteile, wie Proteine, Aschen, Enzyme, Kohlehydrate, wasserlöslicher Glucan, durch Filtrierung beseitigt werden.

## Revendications

1. La méthode d'isolation du glucan immunostimulant à partir de pleurote en forme d'huître (Pleurotus ostreatus), préférablement à partir de ses trognons, par défibrage, par blanchiment ultérieur avec de l'eau oxygénée à la température de 15 à 25 °C pendant 15 - 24 heures dans le milieu d'une solution de natron et par déshydratation, **caractérisé en ce que** le défibrage qui précéde le blanchiment par l'eau oxygénée dans le milieu de la solution de natron avec une concentration du glucan insoluble de 4 à 5 % du poids et avec déshydratation se réalise dans les 26 heures au maximum après la récolte de pleurote en forme d'huître, qui se conservait à la température de 4 à 8 °C, dans un milieu d'au moins la double quantité de la solution aqueuse de carbonate de sodium ou de carbonate de potassium avec la concentration de 0.05 à 0.15 % de poids, avec la valeur de pH de la solution de 8 à 9, pendant 1 - 8 min., où une suspension réactive avec activité enzymatique éliminée de la présente β-(1,3)-D-glucanase est créée, enlevant les composantes solubles dans l'eau de la suspension réactive au moyen de filtration et par lavage parfait avec de l'eau.

2. La méthode selon la revendication 1, **caractérisée en ce que** le blanchiment avec l'eau oxygénée se réalise dans un milieu de la solution de natron avec une concentration de glucan insoluble de 0.05 à 0.09 % de poids.

3. La méthode selon les revendications 1 et 2, **caractérisée en ce que** le défibrage se réalise préférablement pendant 5 minutes.

4. La méthode selon les revendications 1 - 3, **caractérisée en ce qu**'il est préférable de réaliser le défibrage dans les 24 heures après la récolte des pleurotes en forme d'huître.

5. La méthode selon les revendications 1 - 4, **caractérisée en ce qu'**il est préférable de réaliser le défibrage en cas de pleurotes en forme d'huître conservés à la température de 5 °C.

6. La méthode selon les revendications 1 - 5, **caractérisée en ce que** la déshydratation se réalise avec l'éthanol, l'acétone ou par lyophilisation.

7. La méthode selon les revendications 1 - 6, **caractérisée en ce que** les composantes solubles dans l'eau, comme des protéines, cendres, enzymes, saccharides, glucan soluble dans l'eau, sont enlevées de la suspension au moyen de filtration.
